# EUROPEAN PATENT APPLICATION

(11) **EP 4 190 612 A1**
(43) Date of publication of application: **07.06.2023**
(21) Application number: 21850657.4
(22) Date of filing: 21.07.2021
(51) Int. Cl.: B60K 35/00, E02F 9/26, G06F 3/0484

(54) **DISPLAY DEVICE AND WORK VEHICLE PROVIDED WITH DISPLAY DEVICE**

(30) Priority: 29.07.2020 JP 2020128267
(71) Applicant: Yanmar Holdings Co., Ltd., Osaka-shi, Osaka, 530-0013 (JP)
(72) Inventor: KAWAGUCHI, Daisuke, Chikugo-shi, Fukuoka 833-0055 (JP); SUZUKI, Shogo, Chikugo-shi, Fukuoka 833-0055 (JP); TAMURA, Kazuki, Chikugo-shi, Fukuoka 833-0055 (JP)
(74) Representative: Dennemeyer & Associates S.A.
(86) International application number: PCT/JP2021/027289
(87) International publication number: WO 2022/024912

(57) **Abstract**

A display device (10) comprises a display unit (12) and a control unit (181). The display unit (12) can display direct information (44) that indicates object information directly and indirect information (42) that indicates the object information indirectly. The control unit (181) controls the display unit (12) to display the direct information (44) and the indirect information (42). The object information is preferably a changing value.

## Description

### TECHNICAL FIELD

The present invention relates to a display device and a work vehicle provided with the display device.

### BACKGROUND ART

In a construction machine described in Patent Literature 1, a display device re-displays a message, which is displayed according to an operation state of the construction machine, along with the time at which the message is displayed. Thus, even if missing the message, a driver can check a content of the message, and the time of occurrence of the cause that led to displaying of the message.

### CITATION LIST

### Patent Literature

Patent Literature 1: Japanese Unexamined Patent Application Publication No. 2012-155061

### DISCLOSURE OF INVENTION

### PROBLEMS TO BE SOLVED BY THE INVENTION

However, in the construction machine described in Patent Literature 1, the display device merely shows the time, as in "13:15". That is, there is only one mode to display the time.

When there is only one time display mode, it may be difficult, depending on the display mode, for a viewer to recognize the time.

In other words, when there is only one notation method for object information displayed at the display device, it may be difficult for the viewer to recognize the content of the object information displayed at the display device.

The present invention has been made in view of the above issue, and its object is to provide a display device with which a content of displayed object information can be easily recognized, and a work vehicle provided with the display device.

### MEANS FOR SOLVING THE PROBLEMS

According an aspect of the present invention, a display device includes: a display unit, and a control unit. The display unit is capable of displaying direct information that directly indicates object information and indirect information that indirectly indicates the object information. The control unit controls the display unit, thereby to control the displaying of the direct information and the indirect information.

### EFFECT OF THE INVENTION

The present invention can provide a display device with which a content of displayed object information can be easily recognized, and a work vehicle provided with the display device.

### BRIEF DESCRIPTION OF DRAWINGS

FIG. 1 is a block diagram showing a system configuration of a display device according to a first embodiment.
FIG. 2 is a diagram showing a time setting screen displayed at the display device according to the first embodiment.
FIG. 3 is a diagram showing a setting time check image displayed at the display device according to the first embodiment.
FIG. 4 is a diagram showing another example of the time setting screen displayed at the display device according to the first embodiment.
FIGS. 5(a) and (b) are diagrams showing a still another example of the time setting screen displayed at the display device according to the first embodiment.
FIG. 6 is a diagram showing a still another example of the time setting screen displayed at the display device according to the first embodiment.
FIG. 7 is a diagram showing a still another example of the time setting screen displayed at the display device according to the first embodiment.
FIG. 8 is a diagram showing an example of a state display screen displayed at the display device according to the first embodiment.
FIG. 9 is a diagram showing another example of the state display screen displayed at the display device according to the first embodiment.
FIG. 10 is a diagram showing still another example of the state display screen displayed at the display device according to the first embodiment.
FIG. 11 is a diagram showing an example of a function setting screen displayed at the display device according to the first embodiment.
FIG. 12 is a flowchart showing a display control method according to the first embodiment.
FIG. 13(a) is a block diagram showing a system configuration of the display device according to a second embodiment. FIG. 13(b) is a diagram showing a setting change reminder image displayed at the display device according to the second embodiment.
FIG. 14 is a flowchart showing a setting change reminder method executed at the display device according to the second embodiment.
FIG. 15 is a block diagram showing a system configuration of a work vehicle according to a third embodiment.

### DESCRIPTION OF EMBODIMENTS

### DESCRIPTION OF EMBODIMENTS

### [First Embodiment]

An embodiment of the present invention will be described hereinafter with reference to the accompanying drawings. Note that, in the drawings, the same reference signs are given to the same or equivalent portions, and a repeated description is omitted.

### [First Example]

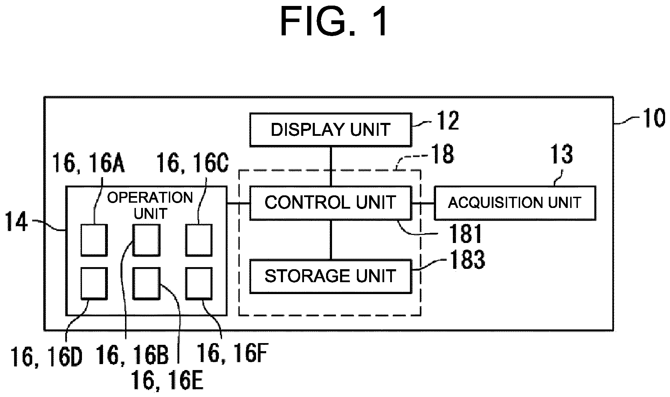

The configuration, etc. of a display device 10 according to the present embodiment will be described. As shown in FIG. 1, the display device 10 has a display unit 12, an acquisition unit 13, an operation unit 14, and a display control unit 18.

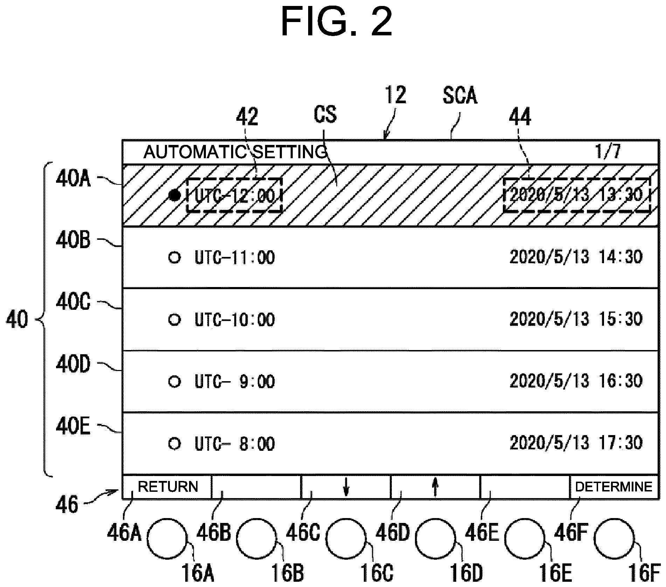

The display unit 12 is composed of, for example, a liquid crystal display or an organic electroluminescence display, and displays a given display screen based on the control of the display control unit 18. As will be described in more detail below, the display screen includes, for example, a GUI (Graphical User Interface), a camera image of the surroundings of a work vehicle 100, and various information about the work vehicle 100, as shown in FIG. 2, FIG. 8, FIG. 10, FIG. 11 and the like.

The acquisition unit 13 includes an interface module, for example, and acquires, from an external device, to-be-displayed object information. The object information includes, for example, various types of information of the work vehicle on which the display device 10 is mounted, specifically, time information displaying the current time, gauge information displaying gauges of the work vehicle, and posture information displaying the posture of the work vehicle.

The operation unit 14 is placed around the display unit 12, for example, accepts an operation of a human operator, and outputs, to the display control unit 18, an operation signal that corresponds to the above operation. This operation unit 14 has at least one operant 16, for example, composed of a pushbutton, and in the present embodiment, six operants 16.

The operation unit 14 having the above configuration outputs an operation signal showing whether or not the operant 16 was operated by the human operator.

In the following, when, for explanation, making a distinction among the plural operants 16 of the display device 10, the plurality of operants 16, as the case may be, are referred to as operants 16A, 16B, 16C, 16D, 16E, and 16F, respectively.

The display control unit 18 is composed of, for example, an ECU (Electronic Control Unit), and is provided with, for example, a control unit 181 and a storage unit 183.

The control unit 181 is composed of a processor such as a CPU (Central Process Unit).

The storage unit 183 is composed of a storage device that stores various data and computer programs. This storage unit 183 stores, as various data, setting information preliminarily input by the human operator, for example. This setting information is, for example, information indicating the "time difference" from a given time in the case of the information about time information, or information indicating the height of an obstacle in the case of below-described information about a work instrument of the work vehicle. Also, a below-described "history information" is stored in the storage unit 183 as the setting information.

In the display control unit 18 having the above configuration, the control unit 181 reads in the computer program stored in the storage unit 183, and functions as the display control unit 18. That is, the control unit 181 causes the display unit 12, the acquisition unit 13, and the operation unit 14 to execute a given process.

Further, the control unit 181 calculates supplementary information ("indirect information 42 or "direct information 44" to be described below) about the object information acquired by the acquisition unit 13.

In the display device 10 having the above configuration; based on the control preset by the display control unit 18, the display screen of the display unit 12 displays, for example, various information about the work vehicle 100. The following is an explanation about an example of the display screen of the display unit 12 with reference to the drawings.

### (Example of Screen Display: Time Setting Screen)

The display screen displayed at the display unit 12 is to be explained with reference to FIG. 2.

FIG. 2 is a diagram showing a time setting screen SCA for setting time information for the display device 10, including a time information display area 40 and an operation content display area 46. In the time information display area 40, candidate time display areas 40A to 40E for becoming candidates for the setting time are arranged in a certain direction.

Further, the time setting screen SCA displays a cursor CS indicated by hatching in the one candidate time display area 40A of the time information display area 40, showing that the human operator's desired candidate time display area 40A is selected.

In the example in FIG. 2, the cursor CS is displayed by the hatching, but it is not limited to this, and as long as one of the candidate time display areas is shown, the cursor CS may be displayed by a specific color, for example.

The operation content display area 46 is a display area that displays the operation content that can be operated by the human operator, and is composed of, for example, plural selected units 46A to 46F placed on one straight line.

These selected units 46A to 46F are displayed in correspondence with the above operants 16A to 16F of the operation unit 14, and operating the operants 16A to 16E that corresponds to the selected units 46A to 46F switches the display content. For example, when the human operator operates (presses down a button) the operant 16C that corresponds to the selected unit 46C, the cursor CS moves from the candidate time display area 40A to the candidate time display area 40B. Further, operating the operant 16A that corresponds to the selected unit 46A causes the display screen to shift to the screen one level above the time setting screen.

Further, each of the plural selected units 46A to 46F is an object, for example.

As a characteristic display mode of the display screen displayed at the display unit 12 according to the present embodiment, each of the candidate time display areas 40A to 40E displays, as information indicating the setting time, standard time information (direct information 44) which displays standard time as it is, and information (indirect information 42) that displays the standard time information by combining a mark, which shows the Coordinated Universal Time (UTC), with a time difference (e.g., - 12:00).

Here, "Coordinated Universal Time" is the time in the atomic time system derived from International Atomic Time. Further, the "time difference" is a difference that is in a time zone and that is between the standard time and the coordinated universal time, and the above time difference includes, for example, a positive or negative sign. The time zone is an entire region that uses the common standard time. Further, "standard time" refers to local time commonly used by a nation or region, and shows the time of the place where the display device 10 is positioned.

In the present example, "Coordinated Universal Time" is information acquired by the acquisition unit 13. Further, the "time difference" is information preliminarily stored in the storage unit 183. Further, "standard time" is information calculated by the control unit 181 based on the Coordinated Universal Time and the time difference.

In the example in FIG. 2, the standard time is displayed by "year, month and day" and "time" as the direct information 44. Further, the direct information 44 does not necessarily have to include the information indicating the "year, month and day".

In this way, the display unit 12 can display the direct information 44 which directly indicates the object information, and the indirect information 42 which indirectly indicates the object information. Then, the control unit 181 controls the display unit 12 thereby to control the display of the direct information 44 and of the indirect information 42. That is, the display device 10 displays the object information displayed at the display unit 12 by both of the direct information 44 and the indirect information 42, and therefore the human operator can recognize the object information from plural perspectives, making it easier to grasp the state.

In the example shown in FIG. 2, even when not knowing the time difference that is in the time zone and that is between the standard time and the Coordinated Universal Time, the human operator visually recognize the direct information 44 (standard time) displayed alongside, and thereby can accurately grasp the state and make a proper setting.

In particular, the control unit 181 so controls the display unit 12 to as display the direct information 44 and the indirect information 42 on the same screen. That is, displaying the direct information 44 and the indirect information 42 on the same screen (i.e., the time setting screen SCA), the human operator, while comparing the direct information 44 with the indirect information 42, can grasp the state, making it possible to smoothly do the operation for selecting and setting the desired candidate time display areas 40A to 40E from the time information display area 40.

That is, when only the indirect information 42 is displayed at the setting of the standard time, there may be a problem that the human operator, unless knowing the time difference that is in the time zone and that is between the standard time and the Coordinated Universal Time, cannot smoothly set the indirect information 42.

### (Example of Switching Screen Display)

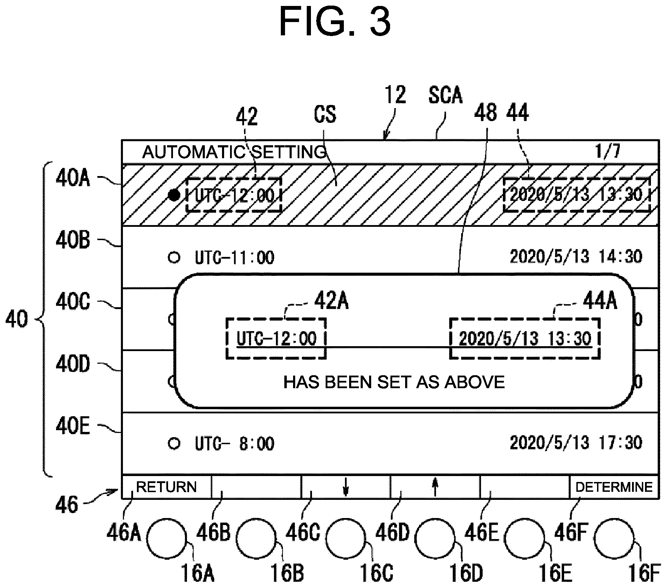

Next, an example of switching the display screen by the operation of the operation unit 14 is to be explained with reference to FIG. 3.

In the above time setting screen SCA, operating the operant 16F (press down a button) that corresponds to the selected unit 46F displaying "Determination" displays a setting time check image 48 (see FIG. 3) that prompts the human operator to check the setting content.

As shown in FIG. 3, the setting time check image 48 is superimposed on the time information display area 40 in the middle of the time setting screen SCA. This setting time checking image 48 displays the candidate time display area (candidate time display area 40Ain the example in FIG. 3) selected by the human operator and a message stating that the setting has been done according to the content thereof.

Thus, additionally displaying the setting time check image 48 through the operation of the operation unit 14 causes the human operator to recheck the selection content at the time of the setting, thus preventing occurrence of any incorrect setting.

At this time, displaying the object information in the setting time check image 48 by the direct information 44A and the indirect information 42A makes it easier to recheck the information.

### (Other Screen Display Example 1)

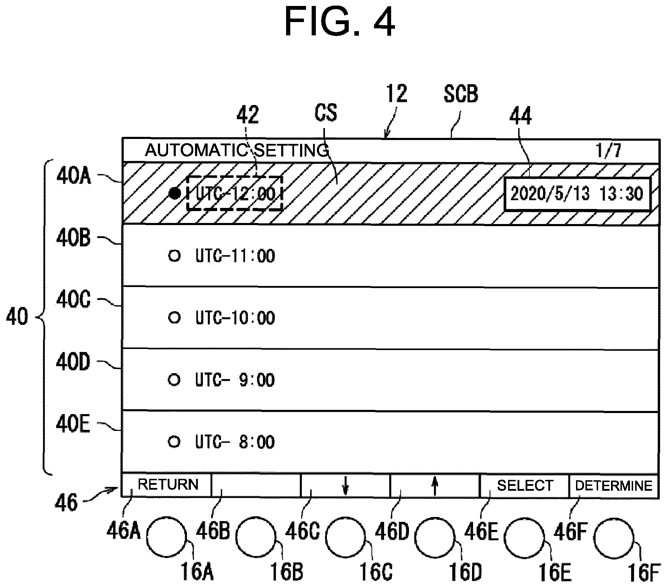

Next, another display example of the time information setting screen is to be explained, referring to FIG. 4. The present display example preliminarily displays the object information by any one of the direct information 44 and the indirect information 42 in the candidate time display areas 40A to 40E of the time information display area 40, additionally displaying the other information by the human operator's operation.

As shown in FIG. 4, a time setting screen SCB, like the above time setting screen SCA, includes the time information display area 40 and the operation content display area 46; in the time information display area 40, the candidate time display areas 40A to 40E are arranged in the certain direction. In the candidate time display areas 40A to 40E, the time information, which is the object information, is preliminarily displayed as the indirect information 42.

Further, as described above, in the operation content display area 46, the operation content that can be operated by the human operator is displayed for each of the selected units 46A to 46F; in the example shown in the figure, "Return" is displayed in the selected unit 46A, "↓ (move down)" is displayed in the selected unit 46C, "↑ (move up)" is displayed in the selected unit 46D, "Select" is displayed in the selected unit 46E, and "Determine" is displayed in the selected unit 46E, for example.

In the time setting screen SCB having the above configuration, the human operator, when operating the operants 16A to 16F that correspond to the selected units 46A to 46F, executes the process of switching the screen display in response to the above operation. For example, in the candidate time display area 40A selected by the cursor CS's operation by the selected units 46C, 46D, operating the operant 16E that corresponds to the selected unit 46E displaying "Select" displays the direct information 44 in a display area that is different from the indirect information 42's display area in the candidate time display area 40A.

This allows the human operator to contrast the indirect information 42 with the direct information 44 at a glance, facilitating an accurate information grasping.

### (Other Screen Display Example 2)

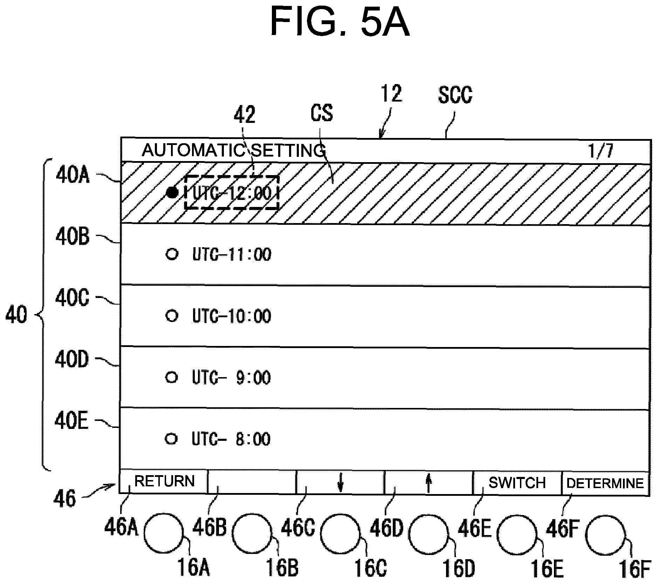

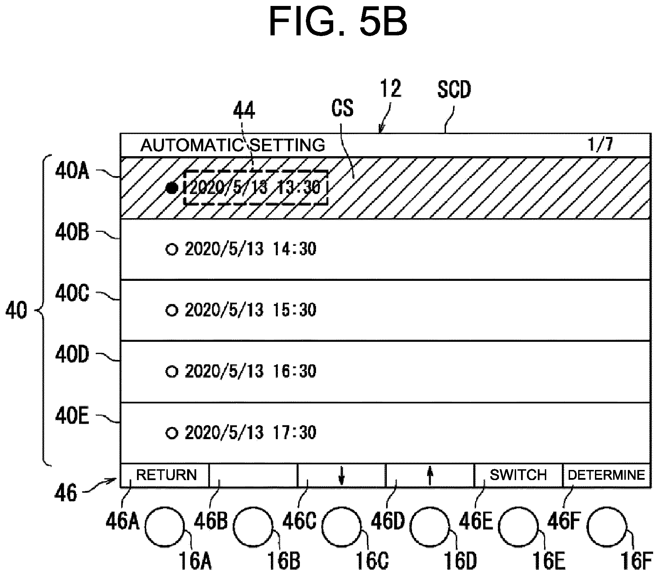

Next, another display example of the time information setting screen is to be explained, referring to FIG. 5. The present display example preliminarily displays, as the object information, one of the direct information 44 and the indirect information 42 in the candidate time display areas 40A to 40E of the time information display area 40, shifting, by the human operator's operation, the screen to a display screen that displays the other information. As shown in FIG. 5(a), a time setting screen SCC, like the above time setting screen SCA, includes the time information display area 40 and the operation content display area 46; in the time information display area 40, the candidate time display areas 40A to 40E are arranged in the certain direction. In the candidate time display areas 40A to 40E, the time information, which is the object information, is preliminarily displayed as the indirect information 42.

Further, as described above, in the operation content display area 46, the operation content that can be operated by the human operator is displayed for each of the selected units 46A to 46F; in the example shown in the figure, "Return" is displayed in the selected unit 46A, "↓ (move down)" is displayed in the selected unit 46C, "↑ (move up)" is displayed in the selected unit 46D, "Select" is displayed in the selected unit 46E, and "Determine" is displayed in the selected unit 46E, for example.

In the time setting screen SCC having the above configuration, the human operator, when operating the operants 16A to 16F that correspond to the selected units 46A to 46F, executes the process of switching the screen display in response to the above operation. For example, operating the operant 16E that corresponds to the selected unit 46E displaying "Switch" executes screen shifting from the time setting screen SCC to a time setting screen SCD (See FIG. 5(b)) which displays the object information by the direct information 44.

Thus, in the example shown in FIG. 5, the human operator's operation of switching the screen can switch the screen between the time setting screen SCC which displays the object information by the indirect information 42, and the time setting screen SCD which displays the object information by the direct information 44, thus switching all listed displays between the indirect information and the direct information. This makes it easy for the human operator to select the display mode that is easily recognized by the human operator, thus facilitating the accurate information grasping.

### (Other Screen Display Example 3)

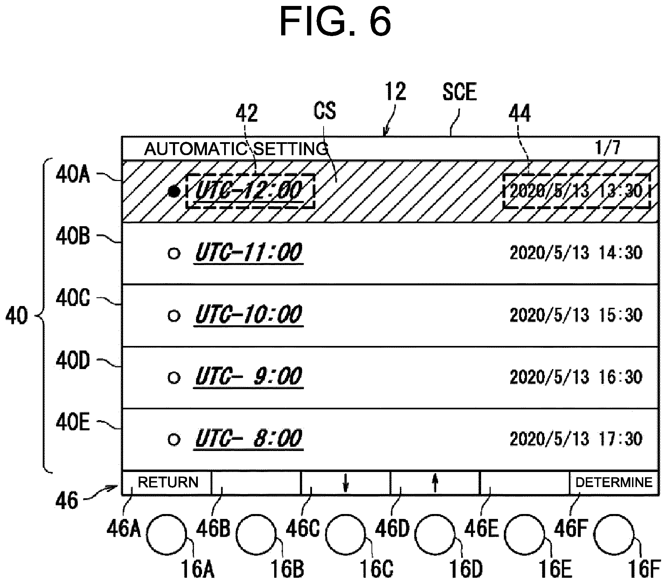

Next, another display example of the time information setting screen is to be explained, referring to FIG. 6. The present display example highlights, as the object information, one of the direct information 44 and the indirect information 42, in the candidate time display areas 40A to 40E of the time information display area 40.

As shown in FIG. 6, the time setting screen SCE, like the above time setting screen SCA, includes the time information display area 40 and the operation content display area 46; in the time information display area 40, the candidate time display areas 40A to 40E are arranged in the certain direction. In the candidate time display areas 40A to 40E, the direct information 44 and the indirect information 42, which are displayed as the object information, are displayed, and the direct information 44 is highlighted in underlined bold text.

As for the operation content display area 46, like the above time setting screen SCA, the selected units 46A to 46F that correspond to the operants 16A to 16F of the operation unit 14 are arranged, thus displaying the functions assigned respectively.

In the time setting screen SCE having the above configuration, the indirect information 42, of the direct information 44 and indirect information 42 that are both displayed in the candidate time display areas 40A to 40E, is highlighted.

This makes it possible for the human operator to intuitively recognize that the main information is the indirect information 42 and the supplementary information is the direct information 44, and the human operator can immediately grasp the content of the indirect information 42 based on the direct information 44, making it possible for the human operator to easily and quickly do the accurate information grasping.

### (Other Screen Display Example 4)

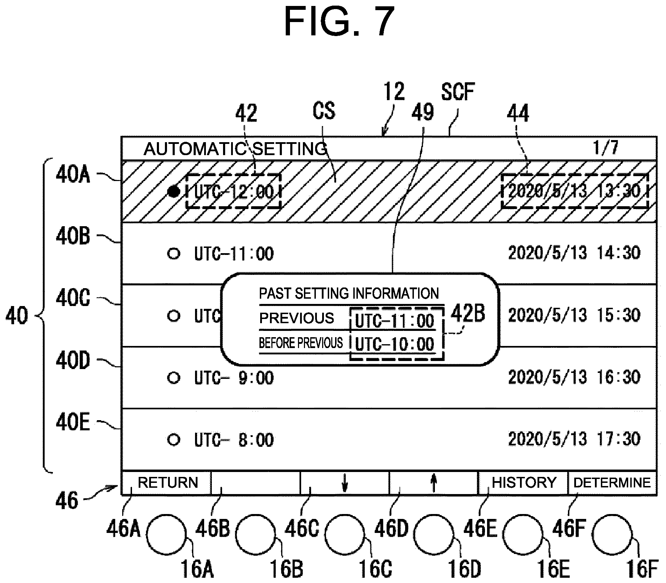

Next, another display example of the time information setting screen is to be explained, referring to FIG. 7. The present display example, by the human operator's operation, displays the past history information on the time information setting screen.

As shown in FIG. 7, a time setting screen SCF, like the above time setting screen SCA, includes the time information display area 40 and the operation content display area 46; in the time information display area 40, the candidate time display areas 40A to 40E are arranged in the certain direction. In the candidate time display areas 40A to 40E, the time information, which is the object information, is preliminarily displayed as the direct information and the indirect information.

Further, as described above, in the operation content display area 46, the operation content that can be operated by the human operator is displayed for each of the selected units 46A to 46F; in the example shown in the figure, "Return" is displayed in the selected unit 46A, "↓ (move down)" is displayed in the selected unit 46C, "↑ (move up)" is displayed in the selected unit 46D, "Select" is displayed in the selected unit 46E, and "Determine" is displayed in the selected unit 46E, for example.

In the time setting screen SCF having the above configuration, the human operator, when operating the operant 16E that corresponds to the selected unit 46E displaying "History", on the time information display area 40, superimposes, at the display unit 12, history information 49 having been stored as the setting information in the storage unit 183. In this way, the control unit 181 so controls the display unit 12 to as display the history information 49.

In the example in FIG. 7, the history information 49 is displayed by the indirect information 42B, but the history information 49 may be displayed by the direct information.

In this way, in the example shown in FIG. 7, the human operator, on the time setting screen SCF, can visually recognize the past history information 49, facilitating the accurate information grasping and the device setting. Further, this history information 49 is stored in the storage unit 183 of the display device 10 each time the setting operation is done by the human operator; then, when the setting operation is to be done, the history information 49 is read out from the storage unit 183 and displayed at the display unit 12 by the human operator's operation of the operant 16E that corresponds to the selected unit 46E displaying "History".

### (Example of Screen Display: State Display Screen)

Next, as an example of a display screen different from the above time information setting screen, a state display screen that displays the information about gauges is to be explained.

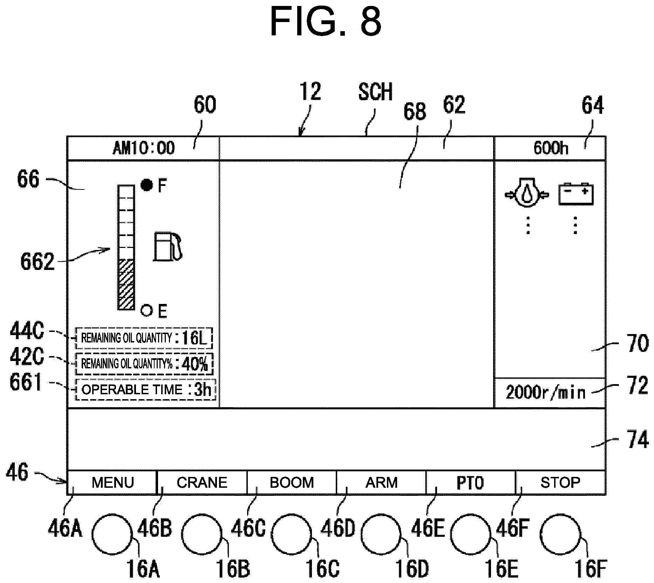

FIG. 8 is a diagram showing a state display screen SCH displayed at the display unit 12. This state display screen SCH is a display screen that is normally displayed when the work vehicle 100 is in operation, and, in a display area thereof, displays various information indicating the work vehicle's state measured by gauges. As shown in the figure, the state display screen SCH includes a display area and the operation content display area 46 which display various information about the work vehicle 100.

The display areas for displaying various information include a time display area 60 placed on the left side of the upper step of the screen, an error display area 62 placed in the middle of the upper step of the screen, an operation time display area 64 placed on the right side of the upper step of the screen, a fuel information display area 66 placed on the left side in the middle step of the screen, a camera image display area 68 placed in the middle of the screen, an icon display area 70 and a revolution speed display area 72 which are placed on the right side at the middle step of the screen, an option information display area 74 placed at the bottom step of the screen, and the operation content display area 46.

The fuel information display area 66 is a display area that shows the remaining fuel oil state, and displays, for example, a graphic showing being the fuel information display area, a gauge 662 showing, by a columnar graph, the amount of the remaining fuel oil (direct information 44C), the remaining oil percentage (indirect information 42C), and an operable time 661 showing the time the work vehicle 100 can be operated by the amount of the remaining fuel oil. Thus, on the state display screen SCH, the to-be-displayed object information is a value showing the work vehicle's state.

In the example in FIG. 8, the indirect information 42C shows the amount of remaining fuel oil in the fuel tank as a ratio (e.g., as a percentage) to the amount of fuel oil at the time of being full.

Also, the example in FIG. 8 displays the remaining fuel oil state as a display object and displays the remaining fuel oil state in the fuel information display area 66, but is not limited to this.

For example, cooling water temperature, for example, may be displayed as a display object.

Further, it is not necessary to display, as the display mode, the work vehicle's state only in a specific display area (fuel information display area 66), but plural display areas can be used thereby to display the work vehicle's state, that is, the state may be displayed by combining the display of the fuel information display area 66 with the display of the icon display area 70 and revolution speed display area 72, for example.

### (Other Screen Display Example 1)

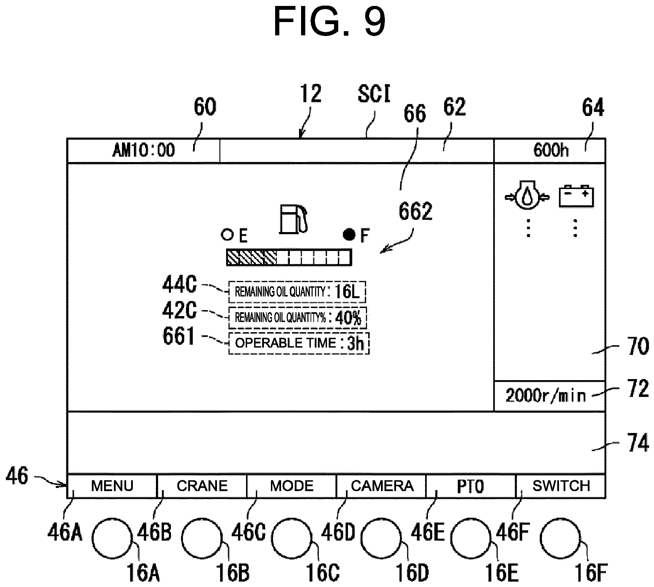

Next, another display example of the state display screen is to be explained, referring to FIG. 9. A state display screen SCI shown in FIG. 9 is another display example of the state display screen SCH displayed at the display unit 12 in FIG. 8, with a fuel information display area 66 placed in the middle of the display unit 12's screen.

As shown in the figure, on the state display screen SCI, the camera image display area 68 on the state display screen SCH (see FIG. 8) is not placed, and only the fuel information display area 66 is placed near the middle of the state display screen SCI is placed near the middle of the state display screen SCI. This makes it easier for the human operator to visually recognize the direct information 44C, the indirect information 42C, the operable time 661 and the gauge 662. Further, the display size of the displayed information in the fuel information display area 66 is properly changed, thereby to further enhance ease of visual recognition.

### (Other Screen Display Example 2)

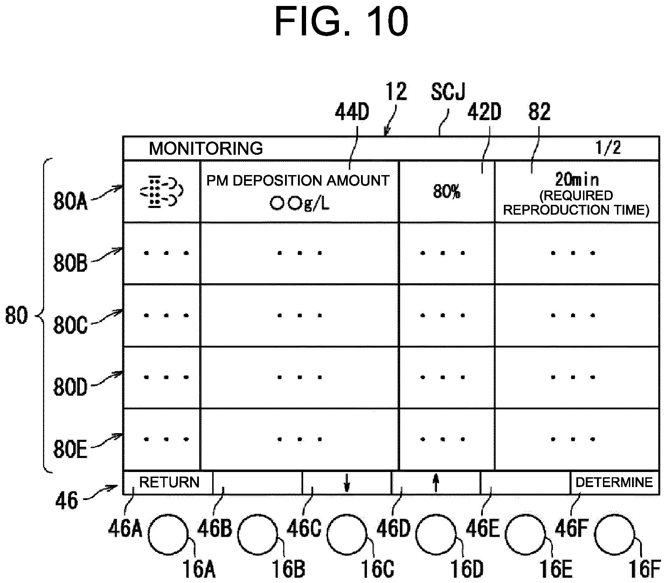

Next, another display example of the state display screen is to be explained with reference to FIG. 10. FIG. 10 is a diagram showing a state display screen SCJ displayed at the display unit 12. This state display screen SCJ is a monitoring screen that displays the state which is of the work vehicle 100's each portion and which is measured by each gauge mounted on the work vehicle 100, and that includes a state display area 80 and the operation content display area 46. In the state display area 80, item-specific state display areas 80A to 80E that display the state information for each item measured by each gauge are arranged in the certain direction.

The item-specific state display areas 80A to 80E display a graphic and the like that display the content of each item, a measured value (direct information 44D), the ratio (e.g., percentage) of the measured value to the maximum value in the above item (indirect information 42D), and other related information 82.

Further, the example in FIG. 10 exemplifies the PM's deposition amount as a to-be-displayed item, and displays, as the direct information 44D, the PM's deposition amount in an exhaust gas purifier that collects the PM (particulate matter) contained in the engine exhaust. Further, as the indirect information 42D, the PM's deposition amount in the exhaust gas purifier is displayed by a ratio to the PM's deposition amount in the exhaust gas purifier (e.g., percentage) to the maximum PM deposition. In this way, on the state display screen SCJ, the to-be-displayed object information is a value showing the work vehicle's state.

The related information 82 shows information related to the work vehicle 100's state measured by the gauge. For example, the related information 82 shows the time (regeneration time) required to regenerate the exhaust gas purifier by incinerating the PM deposited in the exhaust gas purifier.

The operation content display area 46 is a display area that displays the operation content that can be operated by the human operator, and is composed of, for example, plural selected units 46A to 46F placed on one straight line.

These selected units 46A to 46F are displayed in correspondence with the above operants 16A to 16E of the operation unit 14, and operating the operants 16A to 16E that corresponds to the selected units 46A to 46F switches the display content. For example, the human operator, when operating (pressing down a button) the operant 16A that corresponds to the selected unit 46A, displays the display screen one level above the state display screen SCJ.

In this way, on the state display screen SCJ, which lists the measured values for each item, the information about the measured values is displayed by the direct information 44D which displays the measured value as it is, and the indirect information 42D which displays the measured value's ratio to the maximum value, thereby, the human operator can easily estimate the timing of maintenance and refueling and can take an action at the optimum time.

### (Example of Screen Display: Function Setting Screen)

Next, as an example of a display screen different from the above time information setting screen, a function setting screen that displays information about the work instrument's posture is to be explained.

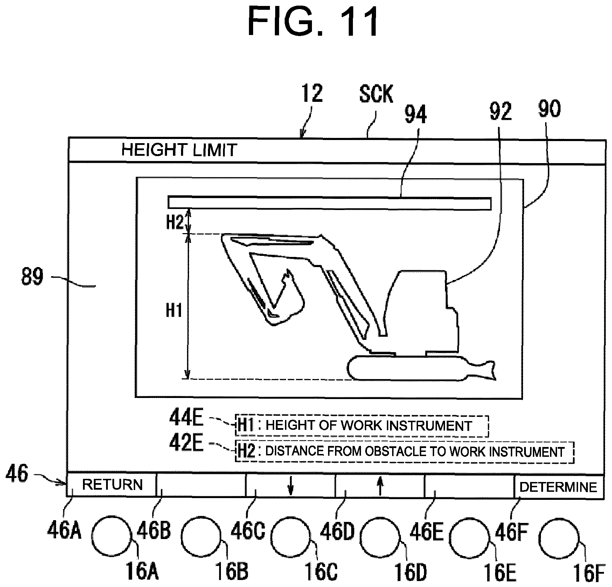

FIG. 11 is a diagram showing a function setting screen SCK displayed at the display unit 12. This function setting screen SCK is a setting screen for setting the work vehicle's function, such as the height limit of the work instrument, and various information about the work instrument's posture is displayed within a display area thereof. As shown in the figure, the function setting screen SCK includes a work vehicle image display area 90, a state display area 89, and the operation content display area 46.

The work vehicle image display area 90 includes, for example, an image 92 showing the work vehicle on which the display device 10 is mounted, and an image 94 showing the ceiling of a structure as an obstacle. In addition, the state display area 89 includes information 44E showing a height H1 of the work instrument, and information 42E showing a distance H2 between the work instrument and the obstacle. That is, the to-be-displayed object information is a value showing the work vehicle's state.

In this way, in the function setting screen SCK, the human operator can visually recognize the direct information 44E and the indirect information 42E at the same time, making it possible to recognize the posture of the work vehicle from plural angles.

As described above with reference to the system configuration diagram in FIG. 1 and the display examples in FIGS. 2 to 11; based on the preset control, at the display unit 12, the display device 10 of the present embodiment displays, as the object information, various information about the work vehicle 100, and the above display is switched based on the operation unit 14's operation.

In particular, the display device 10 of the present embodiment displays the object information by the direct information 44 that directly indicates its content and the indirect information 42 that shows via the other information, thus making it easier to grasp the state.

For example, the human operator who can more easily recognize the content by viewing the direct information 44 than by viewing the indirect information 42, or the human operator who can more easily recognize the content by viewing the indirect information 42 than by viewing the direct information 44, can easily recognize the content of the object information displayed at the display unit 12.

According to the example of the present embodiment; when displaying the time information, not only the indirect information 42 which indirectly indicates the standard time by the mark indirectly indicating the Coordinated Universal Time and by the time difference, but also the direct information 44 which directly indicates the standard time is displayed. Therefore, viewing the standard time indicated by the direct information 44, the human operator can easily recognize the content of the indirect information 42 that includes the information indicating the mark, which indirectly shows the Coordinated Universal Time, and the time difference.

It is preferable that the object information to be displayed at the display unit 12 is "changing value"; an example thereof include the time information, and a value, which shows the work vehicle's state, such as the posture information indicating the work instrument's posture (rotation angle of work instrument, stroke length of hydraulic cylinder, etc.), and the fuel information (amount of remaining oil, temperature of cooling water), etc.

In this way, displaying the object information, which is the "changing value", by the direct information 44 and the indirect information 42 makes it easy to grasp the state even in a difficult-to-grasp state that changes from moment to moment.

Here, the direct information 44 is information that directly indicates the content of the object information, in other words, is absolute information that is uniquely determined for the target.

Further, the indirect information 42 is information that is shown via the other information, in other words, is relative information that is relatively determined based on comparison with the other information.

The above indirect information 42 may include a mark indirectly which shows first information, and may include second information. In this case, the mark indirectly indicating the first information is a direct element of the indirect information 42, and the first information is an indirect element of the indirect information 42. The second information includes a mark. In the present specification, the mark are concepts that include, for example, a letter, a numeric character, and a symbol.

### [Example 2]

Next, the display device according to another example of the present embodiment is to be explained below.

Compared with the display device 10 according to the above example 1, the display device according to the present example is the same in configuration, but different in the content of the object information acquired by the acquisition unit 13. That is, the acquisition unit 13 of the present example acquires, as the object information, both of the direct information 44 and the indirect information 42.

The above display device 10 of the present example, based on the direct information 44 and indirect information 42 as the object information acquired by the acquisition unit 13, executes the display control process by the control unit 181.

### (Display Control Process)

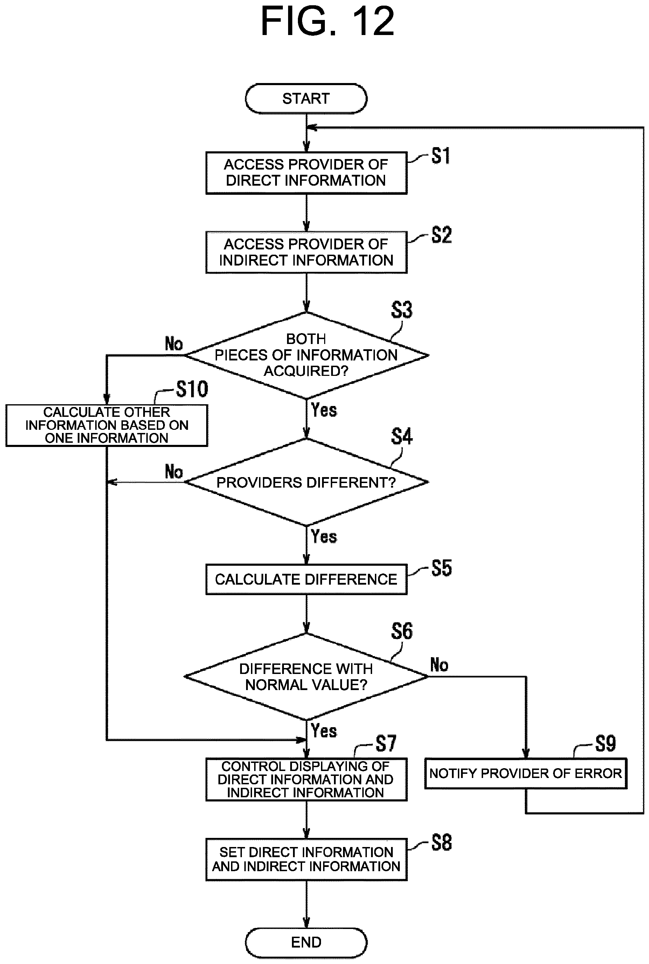

Here, referring to FIG. 12, the display control process by the control unit 181 is to be explained for the case in which the time information is displayed as the object information. In the display control process, the acquisition unit 13 acquires, from an external device positioned outside the display device 10, at least one of the direct information 44 and the indirect information 42. This point is to be explained in detail below. FIG. 12 is a flowchart showing a flow of the display control process.

As shown in FIG. 12, in step S1, the control unit 181 causes the acquisition unit 13 to access the provider of the direct information 44.

In this process, the acquisition unit 13 accesses a main control unit of the work vehicle on which the display device 10 is mounted, for example, and acquires the standard time information (direct information 44) stored in the storage unit of the work vehicle.

When the display device 10 is provided with a timekeeping device that marks time (standard time) based on a preset starting time, the standard time information timed by the timekeeping device may be acquired.

Next, in step S2, the control unit 181 causes the acquisition unit 13 to access the provider of the indirect information 42.

In this process, the acquisition unit 13 accesses a base station via the main control unit of the work vehicle on which the display device 10 is mounted, for example, and acquires, for example, information of the Coordinated Universal Time (part of indirect information 42).

Next, in step S3, the control unit 181 determines whether or not having acquired, from the provider, both of the direct information 44 and the indirect information 42, and with the negative determination made (step S3: No), the control unit 181 moves the process to step S10. Here, the negative determination shows a determination that both pieces of information could not be acquired, i.e., only one of the direct information 44 and the indirect information 42 has been acquired.

Next, in step S10, the control unit 181 calculates the other information based on the one acquired information of the indirect information 42 and the direct information 44. With step S10 ended, the control unit 181 moves the process to step S7.

Note that the present example explains the case in which the acquisition unit 13 acquires both of the indirect information 42 and the direct information 44, but when only one of the indirect information 42 and the direct information 44 can be acquired due to, for example, communication failure of the acquisition unit 13, the process in step S10 is executed, and the display control process is the same as in Example 1.

When the positive determination is made in step S3 above (step S3: Yes), the control unit 181 moves the process to step S4. The positive determination shows that it is determined that both pieces of information have been acquired.

Next, in step S4, the control unit 181 determines whether or not the provider of the indirect information 42 and the provider of the direct information 44 are different, and when the negative determination is made (step S4: No), the control unit 181 moves the process to step S7.

This negative determination shows that the providers of the acquired information are determined not to be different, i.e., the providers are determined to be the same.

Meanwhile, when the positive determination is made in step S4 (step S4: Yes), the control unit 181 moves the process to step S5.

This positive determination shows that the providers of the acquired information are determined to be different.

Next, in step S5, the control unit 181 calculates the difference between the direct information 44 and the indirect information 42.

In this process, the control unit 181 calculates the difference between the information, which is acquired based on the indirect information 42, for example, and the direct information 44.

In the present example, based on the Coordinated Universal Time's information acquired from the base station and the time difference's information stored in the storage unit 183, the control unit 181 calculates the local time's information that corresponds to the above pieces of information. Further, the control unit 181 calculates the difference between the calculated local time's information and the standard time's information acquired from the control unit of the work vehicle.

In this step, the difference between the information, which is acquired based on the indirect information 42, and the direct information 44 has been calculated, but conversely, the difference between the information, which is acquired based on the direct information 44, and the indirect information 42 may be calculated.

Next, in step S6, the control unit 181 determines whether or not the calculated difference is a normal value. In this process, the control unit 181 determines whether or not the absolute value of the difference, for example, is a value within a given range.

Then, when the negative determination is made in step S6 (step S6: No), the control unit 181 moves the process to step S9. The negative determination shows that the difference is not determined to be the normal value. For example, the negative determination shows that the difference is determined not to be the value within the given range.

Next, in step S9, the control unit 181 outputs an error notification to the provider. The error notification includes information indicating that the indirect information 42 and/or the direct information 44 is incorrect, and information for instructing the provider to reacquire the indirect information 42 and/or the direct information 44. Thus, from the provider, the acquisition unit 13 can reacquire accurate indirect information 42 and direct information 44.

Meanwhile, when the positive determination is made in step S6 (step S6: Yes), the control unit 181 moves the process to step S7.

The positive determination shows that the difference is determined to be the normal value and that the difference is the value within the given range.

Next, in step S7, the control unit 181 controls the display unit 12, thereby to display the indirect information 42 and the direct information 44 (see FIG. 2, etc.).

Next, in step S8, the control unit 181, based on the operation unit 14's operation by the human operator, sets, for the display device 10, the indirect information 42 and the direct information 44 as the time information.

In this process, one piece of time information, which is from among plural pieces of time information listed on the display screen of the display unit 12 and which is selected by the human operator, is set as the time information that is always displayed at the display device.

When this step 8 process is ended, the series of display control processes ends.

As described above, according to the display device 10 of the present example, the acquisition unit 13 acquires, from the different providers, the indirect information 42 and the direct information 44, each of which serves as the object information, making it possible to make a correct or incorrect determination of the acquired object information, thus displaying the proper information as the object information. This allows the human operator to easily grasp the state, and also prevents the human operator from determining the state based on the incorrect information.

### [Second Embodiment]

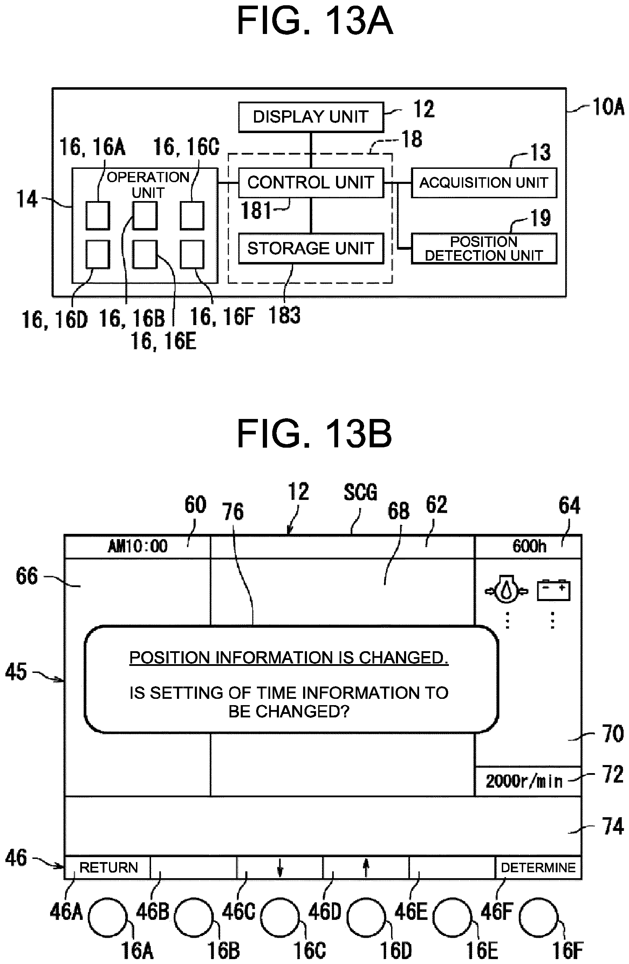

Next, a display device 10A according to a second embodiment of the present invention is to be explained below. As shown in FIG. 13(a), the display device 10A according to the second embodiment differs from the above display device 10 according to the first embodiment in having a position detection unit 19 which this display device 10 does not have.

The following explains about the configuration of the position detection unit 19, etc., which is the characteristic configuration of the display device 10A, and omits an explanation about other configurations.

The position detection unit 19 is, for example, a receiver for a Global Navigation Satellite System (GNSS), and receives a radio wave sent from a satellite included in the GNSS, and, based on the received radio wave, determines the position detection unit 19's position on the earth.

Further, the position detection unit 19 receives the radio wave sent from the satellite included in the GNSS, and acquires information indicating the Coordinated Universal Time.

The display device 10A provided with the position detection unit 19 executes the display control process same as by the above display device 10 according to the first embodiment, and when the position detection unit 19 detects the change in the display device 10A's position, causes the display screen of the display unit 12 to display a setting change reminder image for reminding a setting change of the display device 10A. This setting change reminder image is to be explained below.

### (Display Example of Setting Change Reminder Image)

FIG. 13(b) is a diagram showing the above state display screen (see FIG. 8) with the setting change reminder image superimposed. In the example of FIG. 13, a setting change reminder image 76 that prompts to reset the time information is displayed as the setting change reminder image. The setting change reminder image 76 corresponds to an example of "an image that prompts to change the setting of the object information.

As shown in the figure, a state display screen SCG includes a display area 45 showing various information about the work vehicle on which the display device 10A is mounted, and includes the operation content display area 46. The display area 45 for displaying various information includes the time display area 60 placed on the left side of the upper step of the screen, the error display area 62 placed in the middle of the upper step of the screen, the operation time display area 64 placed on the right side in the upper step of the screen, the fuel information display area 66 placed on the left side in the middle step of the screen, the camera image display area 68 placed in the middle of the screen, the icon display area 70 and the revolution speed display area 72 which are placed on the right side at the middle step of the screen, the option information display area 74 placed at the bottom step of the screen, and the operation content display area 46.

Further, the operation content display area 46 has the configuration same as the operation content display area 46 in the above time setting screen SCA.

In the example in FIG. 13(b), when the position detection unit 19 detects a change in the position of the work vehicle 100 (i.e., a shift from one time zone to another time zone), the setting change reminder image 76 is superimposed on the display area 45 that displays various information on the normal screen SCG. This setting change reminder image 76 displays a message notifying that the position of the work vehicle has changed, a message reminding to change the setting, and an option to select whether or not the setting should be changed.

This prevents the human operator from omitting to reset the time (time information) when the position of the work vehicle, i.e., the display device 10A's position, changes; at the resetting, displaying the above time setting screen SCA (see FIG. 2) and the like allows the human operator to easily do the accurate information grasping.

### (Setting Change Reminder Control Process)

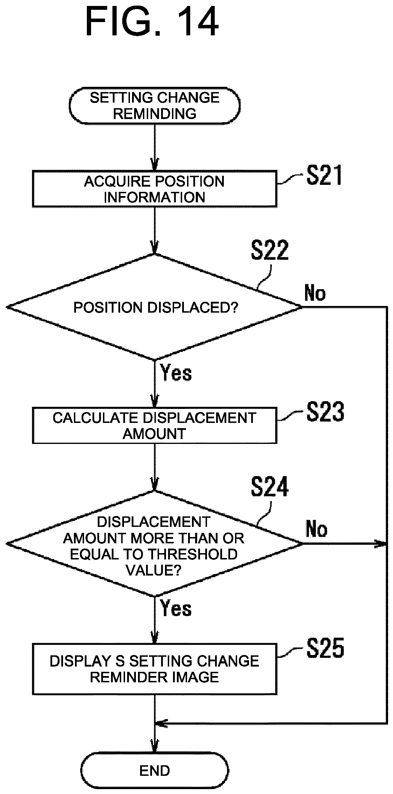

Next, the setting change reminder control process executed in the display device 10A according to the present invention is to be explained with reference to FIG. 14. FIG. 14 is a flowchart showing a flow of the setting change reminder control process.

As shown in the figure, in step S21, the position detection unit 19 acquires the position information of the display device 10A's current position.

Also, the position information acquired in this process is stored in a data storage area of the storage unit 183.

Next, in step S22, the control unit 181 determines whether or not the display device 10A's position is displaced.

In this process, the control unit 181 compares the position information acquired by the position detection this time with the position information detected in the past, thereby to determine whether or not the display device 10A's position is changed.

When it is determined in step S22 that the display device 10A's position is not displaced (step S22: No), the control unit 181 ends the process in this step, thereby to end the series of the processes of the setting change reminder control process.

Meanwhile, when it is determined in step S22 that the display device 10A's position is displaced (step S22: Yes), the control unit 181 moves the process to step S23.

In step S23, the control unit 181 calculates displacement amount of the display device 10A's position based on the position information of the display device 10A.

In this process, the displacement amount of the position is calculated by the difference between the position information acquired by the position detection this time and the position information detected in the past.

Next, in step S24, the control unit 181 determines whether or not the displacement amount of the display device 10A's position is greater than or equal to a threshold value.

In this process, the control unit 181 compares the position's displacement amount calculated by the above step S23 with the threshold value preliminarily stored in the storage unit 183. The threshold value is, for example, a value determined based on the time zone.

When it is determined in step S24 that the displacement amount of the display device 10A's position is not greater than or equal to the threshold value (step S24: Yes), that is, when it is determined that the displacement amount is less than the threshold value, the control unit 181 ends the process in this step, and the series of processes of the setting change reminder control process ends.

Meanwhile, when it is determined in step S24 that the displacement amount of the display device 10A's position is greater than or equal to the threshold value (step S24: No), the control unit 181 moves the process to step S25.

In step S25, the control unit 181 causes the display unit 12 to display the setting change reminder image 76 (see FIG. 13(b)).

The displaying of the setting change reminder image 76 may be done, for example, at the time of position change detecting by the position detection unit 19, or at the time of the display device 10A's startup after detecting of the position change.

When the process in this step is ended, the series of processes of the setting change reminder control process is ended.

As described above, according to the display device 10A of the present embodiment, the control unit 181, based on the displacement amount of the display device 10A's position, so controls the display unit 12 as to display the setting change reminder image 76 that promotes the setting change of time information (object information). Specifically, based on the information which is detected by the position detection unit 19 and which is about an environmental change (change in the current position) of the display device 10A, the setting change reminder image 76 that promotes the setting change of the display device 10A is displayed. By visually recognizing the setting change reminder image 76, the human operator can do the display device 10A's setting change that corresponds to the environmental change, and displaying, on the setting screen, the object information by the direct information 44 and the indirect information 42 makes it easier to grasp the state.

In the display device 10A of the present embodiment, the position detection unit 19 detects the environmental change of the display device 10A; meanwhile, providing a detection unit for detecting the other information thereby to do a setting change reminding that accords to a detection result of the above detection unit is allowed.

### [Third Embodiment]

Next, the work vehicle provided with the above display device 10 according to the embodiment of the present invention is to be explained.

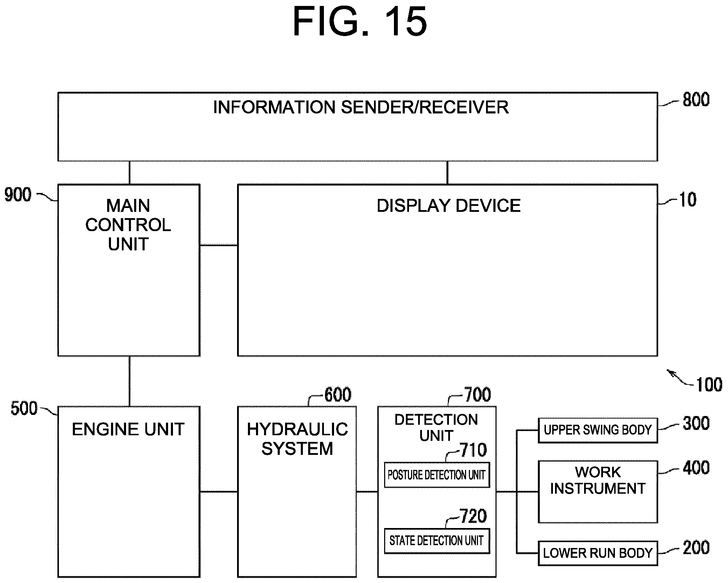

First, with reference to FIG. 15, a schematic of the system configuration of the work vehicle 100 according to the embodiment of the present invention is explained, properly supplementing a physical structure and a combination. The following is an example of the present embodiment, where the work vehicle 100 is a hydraulic excavator.

### [Schematic Configuration of Work Vehicle 100]

FIG. 15 is a block diagram showing the systematic configuration of the work vehicle 100. As shown in the figure, in addition to the above display device 10, the work vehicle 100 further includes, for example, a lower run body 200, a machine body including an upper swing body 300 and a work instrument 400, an engine unit 500 for generating power, a hydraulic system 600 that controls the in-flow and out-flow of the hydraulic oil that operates the machine body, a detection unit 700, an information sender/receiver 800, and a main control unit 900.

Only the characteristic portions in the work vehicle of the present embodiment will be explained below.

The detection unit 700 detects various states of the work vehicle, and includes, for example, a posture detection unit 710 that detects the posture of the work instrument 400 that does the work, and a state detection unit 720.

The posture detection unit 710, when the work instrument 400 includes a boom, an arm, and a bucket, for example, is composed of an angle sensor that detects the rotation angle of the boom, arm, and bucket.

The posture information of the work instrument 400 is calculated based on information about the rotation angle and the like detected by the posture detection unit 710. This posture information includes, for example, the height from the ground to the work instrument 400's uppermost portion ("boom height H1" shown in FIG. 11), the excavation radius of the work instrument 400, and the excavation depth of the work instrument 400.

The state detection unit 720 is composed of the following various sensors that detect the state information, for example.

That is, a cooling water temperature sensor detects the temperature of the cooling water that cools the engine.

Further, a hydraulic oil temperature sensor detects the temperature of the hydraulic oil circulating in the hydraulic system 600.

Further, a DPF (diesel particulate filter) sensor detects the deposition amount of the particulate matter that is in the exhaust gas and that is collected by the exhaust gas purifier.

Further, an engine speedometer detects an engine speed.

Further, a fuel gauge detects the amount of remaining fuel oil.

The information sender/receiver 800 is a communication device that sends and receives information between the work vehicle 100 and the external device, and, from a base station as the external device, for example, receives information of the Coordinated Universal Time.

The main control unit 900 is composed of, for example, an ECU (Electronic Control Unit), and controls the work vehicle 100 as a whole. Further, the main control unit 900 has, as a timekeeping means, a real-time clock that ticks the time (standard time), for example.

In the work vehicle 100 having the above configuration, the posture information and the state information which are detected by the detection unit 700, the time information (Universal Coordinated Time) received by the information sender/receiver 800, and the time information timed in the main control unit 900 are sent to the display device 10. In the display device 10, the display control process is executed as described above, and various information about the work vehicle 100 is displayed at the display unit 12 (see FIG. 2, etc.).

The embodiments and examples of the present invention have been explained with reference to the drawings. However, the present invention is not limited to the above embodiments, and can be made in various modes in the range without departing from its spirit. For example, the following modifications (1) to (4) are allowed. The plural components disclosed in the above embodiments can be properly modified. For example, one of all the components shown in one embodiment may be added to the components of the other embodiment, or some components of all the components shown in one embodiment may be removed from the embodiment.

The drawings schematically show each component as a main subject as so to facilitate understanding of the present invention, and the thickness, length, quantity, spacing, and the like of each shown component is, as the case may be, different from the actual ones due to the convenience of creating the drawings. Further, it is needless to say that the configuration of each component shown in the above embodiments is merely an example and is not particularly limited, and various modifications may be made without substantially departing from the effect of the present invention.
(1) The display device 10 in FIG. 15 may be fixed to the work vehicle 100, or may be mountable and detachable to and from the work vehicle 100. Further, the display device 10 may be a portable communication terminal such as a smartphone and a tablet.
(2) In FIG. 1, as an example of the configuration of the operation unit 14 of the display device 10, the operants 16A to 16F have been explained, but as long as the screen displayed at the display unit 12 can be operated, the configuration of the operation unit 14 is not particularly limited, that is, the operation unit 14 may include a dial, for example.
(3) In the second embodiment, the display device 10A in FIG. 13(a) is provided with the position detection unit 19; but not limited to this, the main control unit 900 or information sender/receiver 800 of the work vehicle 100 shown in FIG. 15 may be provided with the position detection unit 19.
(4) In the third embodiment explained with reference to FIG. 15, the hydraulic excavator is used as one example of the work vehicle 100; however, the work vehicle 100 is not limited to the hydraulic excavator, but may be, for example, another construction machine or agricultural machine. The construction machine is, for example, a loader such as a wheel loader, or a carrier. The agricultural machines are, for example, a riding tractor, a riding combine harvester, or a riding rice transplanter. Further, the work vehicle 100 may be provided with the display device 10A in FIG. 13(a), instead of the display device 10 in FIG. 15.

### INDUSTRIAL APPLICABILITY

The present invention relates to a display device and a work vehicle provided with the display device, and has an industrial applicability.

### DESCRIPTION OF REFERENCE NUMERALS

10, 10A display device
12 display unit
13 acquisition unit
42, 42A to 42E indirect information
44, 44A to 44E direct information
100 work vehicle
181 control unit
400 work instrument

## Claims

1. A display device comprising:
a display unit capable of displaying direct information that directly indicates object information and indirect information that indirectly indicates the object information; and
a control unit that control the display unit, thereby to control the displaying of the direct information and the indirect information.

2. The display device according to claim 1, wherein
the control unit so controls the display unit as to display the direct information and the indirect information on a same screen.

3. The display device according to claim 1 or claim 2, wherein
the object information is a changing value.

4. The display device according to any one of claims 1 to 3, wherein
the object information is time information.

5. The display device according to claim 4, wherein
the direct information directly indicates a standard time, and
the indirect information indicates the standard time by a mark showing Coordinated Universal Time and a time difference.

6. The display device according to any one of claims 1 to 5, further comprising:
an acquisition unit that, from an external device positioned outside the display device, acquires at least one of the direct information and the indirect information.

7. The display device according to any one of claims 1 to 6, further comprising:
a storage unit that stores the direct information or the indirect information as history information,
wherein the control unit so controls the display unit as to display the history information.

8. The display device according to any one of claims 1 to 7, wherein
the control unit, based on a displacement amount of a position of the display device, so controls the display unit as to display an image that prompts to change a setting of the object information.

9. A work vehicle comprising:
the display device according to any one of claims 1 to 8; and
a work instrument that does work.
